# EUROPEAN PATENT APPLICATION

(11) **EP 2 782 092 A2**
(43) Date of publication of application: **24.09.2014**
(21) Application number: 14159866.4
(22) Date of filing: 14.03.2014
(51) Int. Cl.: G09G 5/00, G09G 5/14, H04N 1/00, H04N 5/00, H04N 21/00

(54) **Screen control method and electronic device therefor**

(30) Priority: 18.03.2013 KR 20130028433
(71) Applicant: Samsung Electronics Co., Ltd., Suwon-si Gyeonggi-do 443-742 (KR)
(72) Inventor: Chae,, Yong-Su, Jeollanam-do (KR); Kim,, Moon-Soo, Seoul (KR); Kim,, Jae-Dong, Seoul (KR)
(74) Representative: Nederlandsch Octrooibureau

(57) **Abstract**

A method and apparatus for combining characteristics of images and applying the combined characteristic to a display or a camera in an electronic device. The method includes displaying a plurality of images in which an image processing parameter value is applied to a reference image step by step, selecting any one of the plurality of images, and applying an image processing parameter value for the selected image to a display or a camera.

## Description

### TECHNICAL FIELD

The present disclosure relates to a method and apparatus for controlling a screen in an electronic device.

### BACKGROUND

Electronic devices, which have become necessities of modem life due to ease of carrying, have been developed into multimedia devices, which provide various services such as a voice and video communication service, an information input and output service, and a data transmission and reception service.

The electronic device has a display and displays state information of the electronic device, characters input by a user, moving pictures, and still pictures on the display. Also, the electronic device may also display moving pictures and still pictures photographed by a camera on the display.

Herein, at least one information displayed on the display of the electronic device is displayed in consideration of a color sense set by a manufacturer of the electronic device. Accordingly, there is a user who wants to change settings to a different color sense except for the color sense set for the display of the electronic device by the manufacturer.

However, there is an inconvenience in that the color sense of the camera or the display installed in the electronic device is not easily applied to a color sense a user wants except for the color sense set by the manufacturer.

### SUMMARY

To address the above-discussed deficiencies, it is a primary object to provide an apparatus and method for controlling a screen in an electronic device.

Another aspect of the present disclosure is to provide an apparatus and method for controlling a screen using an image processing parameter value in an electronic device.

Another aspect of the present disclosure is to provide an apparatus and method for controlling a screen using an image processing parameter value of an image selected among images to which the image processing parameter value is applied step by step in an electronic device.

Another aspect of the present disclosure is to provide an apparatus and method for generating a personalization profile using an image processing parameter value in an electronic device.

Another aspect of the present disclosure is to provide an apparatus and method for sharing a personalization profile in an electronic device.

In accordance with an aspect of the present disclosure, a method of controlling a screen in an electronic device is provided. The method includes displaying a plurality of images in which an image processing parameter value is applied to a reference image step by step, selecting any one of the plurality of images, and applying an image processing parameter value for the selected image to a display or a camera.

In accordance with another aspect of the present disclosure, a method of controlling a screen in an electronic device is provided. The method includes displaying a plurality of images in which an image processing parameter value is applied to a reference image step by step, selecting any one of the plurality of images, and generating a profile using an image processing parameter value for the selected image.

In accordance with another aspect of the present disclosure, a method of controlling a screen in an electronic device is provided. The method includes displaying a plurality of images in which an image processing parameter value is applied to a reference image step by step, selecting any one of the plurality of images, generating a profile using an image processing parameter value for the selected image, and transmitting the profile to a counterpart electronic device connected with the electronic device by wire or wirelessly.

In accordance with another aspect of the present disclosure, an electronic device is provided. The electronic device includes at least one processor, at least one memory, and at least one program which is stored in at least the one memory and is configured to be executable by at least the one processor, wherein at least the one processor displays a plurality of images in which an image processing parameter value is applied to a reference image step by step, selects any one of the plurality of images, and applies an image processing parameter value for the selected image to a display or a camera.

In accordance with another aspect of the present disclosure, an electronic device is provided. The electronic device includes at least one processor, at least one memory, and at least one program which is stored in at least the one memory and is configured to be executable by at least the one processor, wherein at least the one processor displays a plurality of images in which an image processing parameter value is applied to a reference image step by step, selects any one of the plurality of images, and generates a profile using an image processing parameter value for the selected image.

In accordance with another aspect of the present disclosure, an electronic device is provided. The electronic device includes at least one processor, at least one memory, and at least one program which is stored in at least the one memory and is configured to be executable by at least the one processor, wherein at least the one processor displays a plurality of images in which an image processing parameter value is applied to a reference image step by step, selects any one of the plurality of images, generates a profile using an image processing parameter value for the selected image, and transmits the profile to a counterpart electronic device connected with the electronic device by wire or wirelessly.

Preferably, the method of controlling a screen in an electronic device, the method comprising: displaying a plurality of images in which an image processing parameter value is applied to a reference image step by step; selecting one of the plurality of images; and generating a profile using an image processing parameter value for the selected image.

Preferably, the method is wherein generating the profile comprises storing the profile in a storage device that is wire or wirelessly connected to the electronic device.

Preferably, the method of controlling a screen in an electronic device, the method comprising: displaying a plurality of images in which an image processing parameter value is applied to a reference image step by step; selecting one of the plurality of images; generating a profile using an image processing parameter value for the selected image; and transmitting the profile to a counterpart electronic device that is wire or wirelessly connected to the electronic device.

Preferably, the electronic device is at least one processor; and at least one memory configured to store at least one program wherein at least the one processor is configured to execute program code of at least the one program to: cause a display to display a plurality of images in which an image processing parameter value is applied to a reference image step by step, select one of the plurality of images, and generate a profile using an image processing parameter value for the selected image.

Preferably, the electronic device is wherein at least the one processor is configured to store the profile in a storage device wire or wirelessly connected to the electronic device.

Preferably, the electronic device is at least one processor; and at least one memory configured to store at least one program, wherein at least the one processor is configured to execute program code of at least the one program to: cause a display to display a plurality of images in which an image processing parameter value is applied to a reference image step by step, select one of the plurality of images, generate a profile using an image processing parameter value for the selected image, and cause transmission of the profile to a counterpart electronic device that is wire or wirelessly connected to the electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block diagram of a configuration of an electronic device according to one embodiment of the present disclosure;
FIG. 2 illustrates a block diagram of a detailed configuration of a processor according to one embodiment of the present disclosure;
FIG. 3A illustrates a flowchart for a process of controlling a screen using an image processing parameter value in an electronic device according to one embodiment of the present disclosure;
FIG. 3B illustrates a block diagram of a configuration of an electronic device for controlling a screen using an image processing parameter value according to one embodiment of the present disclosure;
FIG. 4 illustrates a flowchart for a process of controlling a screen using an image processing parameter value in an electronic device according to another embodiment of the present disclosure;
FIG. 5 illustrates a flowchart for a process of generating a personalization profile in an electronic device according to one embodiment of the present disclosure;
FIG. 6 illustrates a flowchart for a process of sharing a personalization profile in an electronic device according to one embodiment of the present disclosure;
FIGs. 7A and 7B illustrate a process of determining an image processing parameter value in an electronic device according to one embodiment of the present disclosure; and
FIG. 8 illustrates a system for sharing a personalization profile in an electronic device according to one embodiment of the present disclosure.

### DETAILED DESCRIPTION

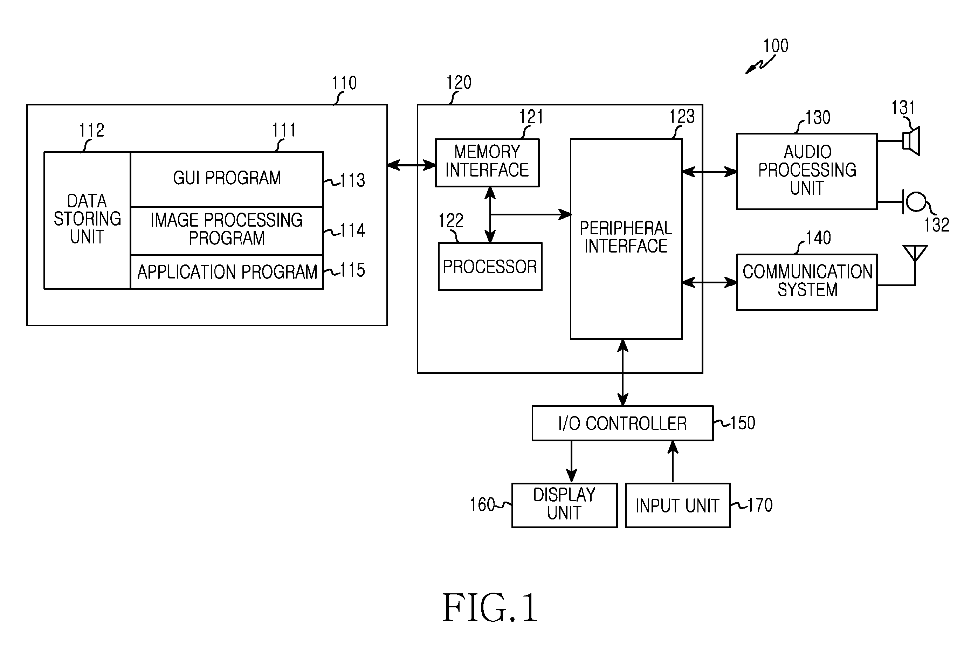

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Exemplary embodiments of the present disclosure will be described herein below with reference to the accompanying drawings. In the following description, well-known functions or constructions are not described in detail since they would obscure the disclosure in unnecessary detail.

The present disclosure relates to a method and apparatus for combining characteristics of images and applying the combined characteristic to a display or a camera in an electronic device.

Hereinafter, the electronic device may be any one of a mobile communication terminal, a Personal Digital Assistant (PDA), a Personal Computer (PC), a laptop, a smart phone, a netbook, a television (TV), a Mobile Internet Device (MID), a Ultra Mobile PC (UMPC), a tablet PC, a navigation device, a smart TV, a digital camera, a refrigerator, a digital watch, and a Moving Picture Experts Group (MPEG) layer 3 (MP3) player, which each of them having a display or a camera.

FIG. 1 illustrates a block diagram of a configuration of an electronic device according to one embodiment of the present disclosure.

As shown in FIG. 1, the electronic device denoted by 100 may include a memory 110, a processor unit 120, an audio processing unit 130, a communication system 140, an Input/Output (I/O) controller 150, a display unit 160, and an input unit 170. Herein, the memory 110 may be a plurality of memories.

A description will be given for respective components as follows.

The memory 110 may include a program storing unit 111 for storing programs for controlling operations of the electronic device 100 and a data storing unit 112 for storing data generated while the programs are executed. For example, the data storing unit 112 may store at least one personalization profile. Herein, the personalization profile may include at least one image processing parameter value for an image displayed on the display unit 160 of the electronic device 100. Herein, the image processing parameter value may include at least one of a color, contrast, chroma, brightness, sharpness, a gamma, a gray scale, and a color temperature, for an image.

The program storing unit 111 may include a Graphic User Interface (GUI) program 113, an image processing program 114, and at least one application program 115. Herein, the programs included in the program storing unit 111 may be expressed in an instruction set as a set of instructions.

The GUI program 113 may include at least one software component for providing a UI as graphics on the display unit 160. For one example, the GUI program 113 may include an instruction for displaying information of an application program driven by a processor 122 on the display unit 160. For another example, the GUI program 113 may include an instruction for displaying a plurality of images to which an image processing parameter value is applied step by step by the image processing program 114.

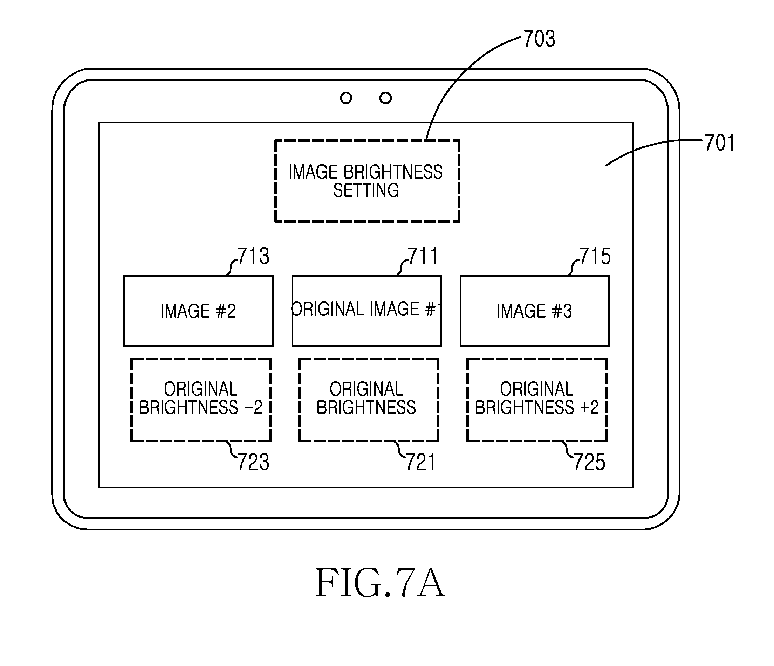

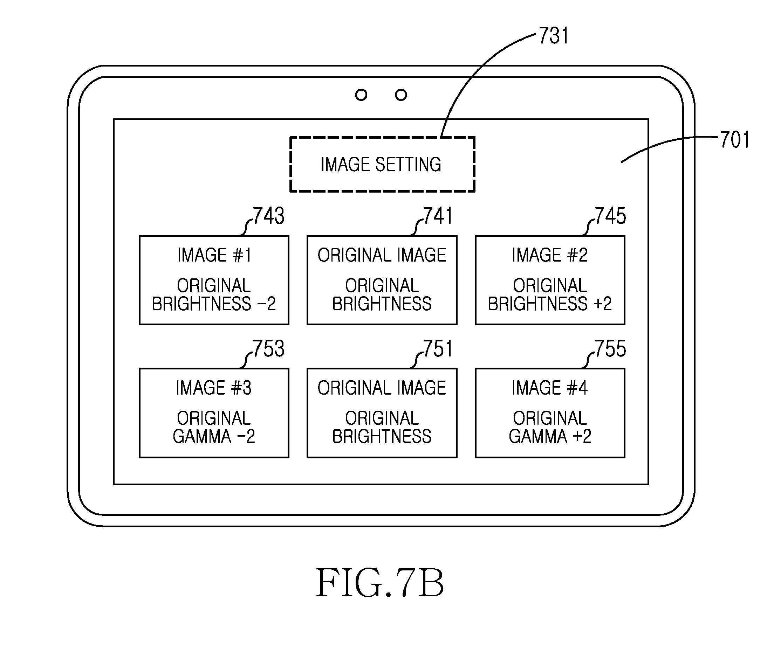

The image processing program 114 may include at least one software component for controlling a screen using an image processing parameter value. For example, the image processing program 114 applies an image processing parameter value for an image selected among a plurality of images to which the image processing parameter value is applied step by step to a display or a camera. For one example, as shown in FIG. 7A, when a first image 713 is selected among an original image 711 whose brightness which is displayed on a display unit 701 is not corrected, the first image 713 to which a brightness value in which a first reference value 723 is subtracted from original brightness 721 of the original image 711 is applied, and a second image 715 to which a brightness value in which a second reference value 725 is added to the original brightness 721 of the original image 711 is applied, the image processing program 114 applies the brightness value which is applied to the first image 713 to the display or the camera. For another example, as shown in FIG. 7B, when a second image 745 and a third image 753 are selected among an original image 741 whose brightness which is displayed on the display unit 701 is not corrected, a first image 743 to which a brightness value in which a first reference value is subtracted from original brightness of the original image 741 is applied, the second image 745 to which a brightness value in which a second reference value is added to the original brightness of the original image 741 is applied, an original image 751 whose gamma is not corrected, the third image 753 to which a gamma value in which a third reference value is subtracted from original gamma of the original image 751 is applied, and a fourth image 755 to which a gamma value in which a fourth reference value is added to the original gamma of the original image 751 is applied, the image processing program 114 may apply the brightness value which is applied to the second image 745 and the gamma value which is applied to the third image 753 to the display or the camera.

Also, the image processing program 114 may generate a personalization profile using an image processing parameter value. For one example, as shown in FIG. 7A, when the first image 713 is selected, the image processing program 114 may generate a personalization profile which may be applied to the display or the camera, using the brightness value which is applied to the first image 713. For another example, as shown in FIG. 7B, when the second image 745 and the third image 753 are selected, the image processing program 114 may generate a personalization profile which may be applied to the display or the camera, using the brightness value which is applied to the second image 743 and the gamma value which is applied to the third image 753.

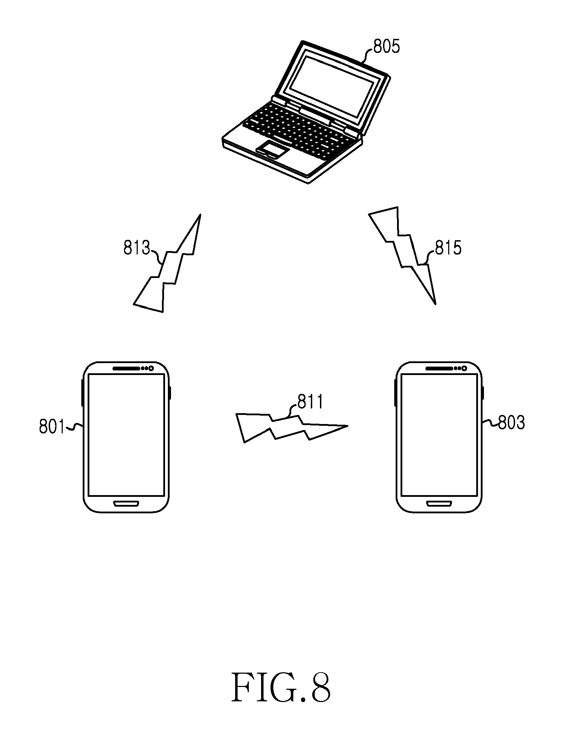

Also, the image processing program 114 may perform a control operation to transmit a personalization profile to a counterpart electronic device. For one example, as shown in FIG. 8, a first electronic device 801 may transmit a personalization profile to a second electronic device 803 using at least one application program. Herein, the first electronic device 801 may transmit the personalization profile to the second electronic device 803 through local area wireless communication (Bluetooth, Near Field Communication (NFC), Wireless-Fidelity (Wi-Fi), Wi-Fi Direct, Infrared Data Association (IrDA) communication, etc.) or the communication system 140. For another example, the first electronic device 801 may transmit a personalization profile to at least one of a server 805 and a cloud server. Herein, the first electronic device 801 may transmit the personalization profile to at least one of the server 805 and the cloud server through the local area wireless communication (Bluetooth, NFC, Wi-Fi, Wi-Fi Direct, IrDA communication, etc.) or the communication system 140.

The application program 115 may include a software component for at least one application program installed in the electronic device 100.

The processor unit 120 may include a memory interface 121, at least one processor 122, and a peripheral interface 123. Herein, the memory interface 121, at least the one processor 122, and the peripheral interface 123 which are included in the processor unit 120 may be integrated in at least one Integrated Circuit (IC) or be separately implemented.

The memory interface 121 controls that a component like the processor 122 or the peripheral interface 123 accesses the memory 110.

The processor 122 provides a variety of multimedia services using at least one software program. Also, the processor 122 executes at least one program stored in the memory 110 and provides a service according to the corresponding program.

The peripheral interface 123 controls connection among an I/O peripheral of the electronic device 100, the processor 122, and the memory interface 121.

The audio processing unit 130 provides an audio interface between a user and the electronic device 100 through a speaker 131 and a microphone 132.

The communication system 140 performs a communication function for voice and data communication. Herein, the communication system 140 may be classified into a plurality of communication sub-modules which support different communication networks. For example, the communication network may be, but is not limited to, any one of a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a Wi-Fi network, a Bluetooth network, and a Near Field Communication (NFC) network.

The I/O controller 150 provides an interface between I/O devices, such as the display device 160 and the input unit 170, and the peripheral interface 124.

The display unit 160 displays state information of the electronic device 100, characters input by the user, moving pictures, and still pictures. For one example, the display unit 160 displays information of an application program driven by the processor 122 according to control of the GUI program 113. For another example, the display unit 160 may display a plurality of images to which an image processing parameter value provided from the image processing program 114 is applied step by step.

The input unit 170 provides input data generated by selection of the user to the processor unit 120 through the I/O controller 150. Herein, the input unit 170 includes a keypad including at least one hardware button and a touch screen for sensing touch information. For example, the input unit 170 provides touch information such as a touch, touch motion, and touch release which are sensed through the touch screen to the processor 122 through the I/O controller 150.

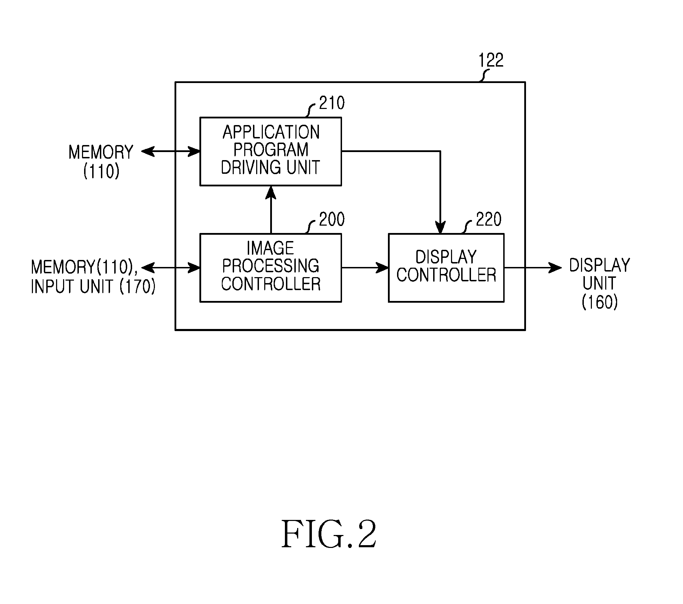

FIG. 2 illustrates a block diagram of a detailed configuration of a processor according to one embodiment of the present disclosure.

As shown in FIGs. 1 and 2, the processor 122 may include an image processing controller 200, an application program driving unit 210, and a display controller 220.

The image processing controller 200 executes the image processing program 11 stored in the program storing unit 111 and controls a screen using an image processing parameter value. For example, the image processing controller 200 applies an image processing parameter value for an image selected among a plurality of images to which the image processing parameter value is applied step by step to a display or a camera. For one example, as shown in FIG. 7A, when a first image 713 is selected among an original image 711 whose brightness which is displayed on a display unit 701 is not corrected, the first image 713 to which a brightness value in which a first reference value 723 is subtracted from original brightness 721 of the original image 711 is applied, and a second image 715 to which a brightness value in which a second reference value 725 is added to the original brightness 721 of the original image 711 is applied, the image processing controller 200 applies the brightness value which is applied to the first image 713 to the display or the camera. For another example, as shown in FIG. 7B, when a second image 745 and a third image 753 are selected among an original image 741 whose brightness which is displayed on the display unit 701 is not corrected, a first image 743 to which a brightness value in which a first reference value is subtracted from original brightness of the original image 741 is applied, the second image 745 to which a brightness value in which a second reference value is added to the original brightness of the original image 741 is applied, an original image 751 whose gamma is not corrected, the third image 753 to which a gamma value in which a third reference value is subtracted from original gamma of the original image 751 is applied, and a fourth image 755 to which a gamma value in which a fourth reference value is added to the original gamma of the original image 751 is applied, the image processing controller 200 may apply the brightness value which is applied to the second image 745 and the gamma value which is applied to the third image 753 to the display or the camera.

Also, the image processing controller 200 may execute the image processing program 114 and generate a personalization profile using an image processing parameter value. For one example, as shown in FIG. 7A, when the first image 713 is selected, the image processing controller 200 may generate a personalization profile which may be applied to the display or the camera, using the brightness value which is applied to the first image 713. For another example, as shown in FIG. 7B, when the second image 745 and the third image 753 are selected, the image processing controller 200 may generate a personalization profile which may be applied to the display or the camera, using the brightness value which is applied to the second image 743 and the gamma value which is applied to the third image 753.

Also, the image processing controller 200 may execute the image processing program 114 and transmit a personalization profile to a counterpart electronic device. For example, as shown in FIG. 8, a first electronic device 801 may transmit a personalization profile to a second electronic device 803 using at least one application program. Herein, the first electronic device 801 may transmit the personalization profile to the second electronic device 803 through local area wireless communication (Bluetooth, NFC, Wi-Fi, Wi-Fi Direct, IrDA communication, etc.) or the communication system 140. For another example, the first electronic device 801 may transmit a personalization profile to at least one of a server 805 and a cloud server. Herein, the first electronic device 801 may transmit the personalization profile to at least one of the server 805 and the cloud server through the local area wireless communication (Bluetooth, NFC, Wi-Fi, Wi-Fi Direct, IrDA communication, etc.) or the communication system 140.

The application program driving unit 210 executes at least one application program 115 stored in the program storing unit 111 and provides a service according to the corresponding application 115. Herein, the application program driving unit 210 may receive a personalization profile to be transmitted to a counterpart electronic device, from the image processing controller 200.

The display controller 220 perform a control operation to execute the GUI program 113 stored in the program storing unit 111 and display a UI as graphics on the display unit 160. For one example, the display controller 220 performs a control operation to display information of an application program driven by the processor 122 on the display unit 160. For another example, the display controller 220 may perform a control operation to display a plurality of images to which an image processing parameter value is applied step by step by the image processing controller 200 on the display unit 160.

In above-described one embodiment of the present disclosure, the electronic device 100 controls a screen using the processor 122 including the image processing controller 200.

In another embodiment of the present disclosure, the electronic device 100 may include a separate image processing module for controlling a screen.

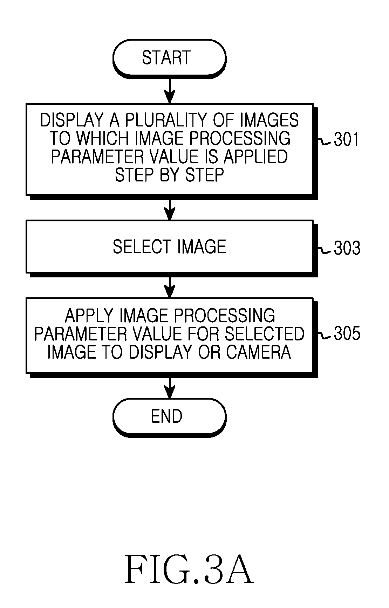

FIG. 3A illustrates a flowchart of a process of controlling a screen using an image processing parameter value in an electronic device according to one embodiment of the present disclosure.

Referring to FIG. 3A, the electronic device displays a plurality of images to which an image processing parameter value is applied step by step in step 301. Herein, the image processing parameter value may include at least one of a color, contrast, chroma, brightness, sharpness, a gamma, a gray scale, and a color temperature, for an image. For example, as shown in FIG. 7A, in case of an "image brightness setting" 703, the electronic device displays an original image 711 whose brightness is not corrected, the first image 713 to which a brightness value in which a first reference value 723 is subtracted from original brightness 721 of the original image 711 is applied, and the second image 715, to which a brightness value in which a second reference value 725 is added to the original brightness 721 of the original image 711 is applied, on a display unit 701. Also, the electronic device may display a plurality of images to which a plurality of image processing parameter values are applied step by step. For example, as shown in FIG. 7B, in case of an "image setting" 731, the electronic device may display an original image 741 whose brightness is not corrected, a first image 743 to which a brightness value in which a first reference value is subtracted from original brightness of the original image 741 is applied, a second image 745 to which a brightness value in which a second reference value is added to the original brightness of the original image 741 is applied, an original image 751 whose gamma is not corrected, a third image 753 to which a gamma value in which a third reference value is subtracted from original gamma of the original image 751 is applied, and a fourth image 755, to which a gamma value in which a fourth reference value is added to the original gamma of the original image 751 is applied, on the display unit 701.

After the plurality of images to which the image processing parameter value is applied step by step are displayed, the electronic device verifies whether one of the plurality of images is selected in step 303. For one example, as shown in FIG. 7A, the electronic device verifies whether any one is selected among the original image 711 whose brightness is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied. Also, the electronic device may verify whether any one of a plurality of images to which a plurality of image processing parameter values are applied step by step is selected. For example, as shown in FIG. 7B, the electronic device may verify whether any one is selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755, to which the gamma value in which the fourth reference value is added to the original gamma of the original image 751 is applied.

Thereafter, the electronic device applies the image processing parameter value for the selected image to a display or a camera in step 305. For one example, as shown in FIG. 7A, when the first image 713 is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied, the electronic device applies the brightness value which is applied to the first image 713 to the display or the camera. For another example, as shown in FIG. 7B, when the second image 745 and the third image 753 are selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755 to which the gamma value in which the fourth reference value is added to the original gamma of the original image 751 is applied, the electronic device may apply the brightness value which is applied to the second image 745 and the gamma value which is applied to the third image 753 to the display or the camera.

In addition, the electronic device may generate a personalization profile using an image processing parameter value. For one example, as shown in FIG. 7A, when the first image 713 is selected, the electronic device may generate a personalization profile which may be applied to the display or the camera, using the brightness value which is applied to the first image 713. For another example, as shown in FIG. 7B, when the second image 745 and the third image 753 are selected, the electronic device may generate a personalization profile which may be applied to the display or the camera, using the brightness value which is applied to the second image 743 and the gamma value which is applied to the third image 753.

In addition, the electronic device may share a personalization profile. For example, as shown in FIG. 8, a first electronic device 801 may transmit a personalization profile to a second electronic device 803 using at least one application program. Herein, the first electronic device 801 may transmit the personalization profile to the second electronic device 803 through local area wireless communication (Bluetooth, NFC, Wi-Fi, Wi-Fi Direct, IrDA communication, etc.) or the communication system 140. For another example, the first electronic device 801 may transmit a personalization profile to at least one of a server 805 and a cloud server. Herein, the first electronic device 801 may transmit the personalization profile to at least one of the server 805 and the cloud server through the local area wireless communication (Bluetooth, NFC, Wi-Fi, Wi-Fi Direct, IrDA communication, etc.) or the communication system 140.

Thereafter, the electronic device ends the algorithm of FIG. 3A.

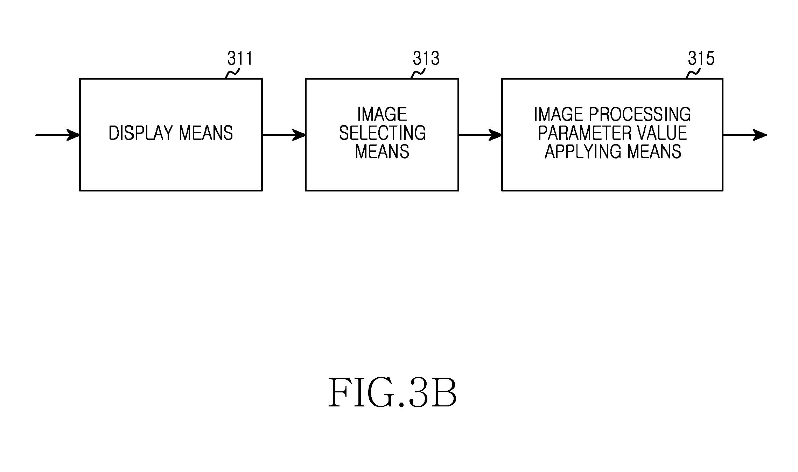

As described above, the process of controlling the screen in the electronic device may be configured, as shown in FIG. 3B, as an apparatus for controlling the screen.

FIG. 3B illustrates a block diagram of a configuration of an electronic device for controlling a screen using an image processing parameter value according to one embodiment of the present disclosure.

Referring to FIG. 3B, the electronic device may include a display means, that is, a first means 311 for displaying a plurality of images to which an image processing parameter value is applied step by step, an image selecting means, that is, a second means 313 for selecting an image, and an image processing parameter value applying means, that is, a third means 315 for applying the image processing parameter value to a display or a camera.

The first means 311 displays the plurality of images to which the image processing parameter value is applied step by step. Herein, the image processing parameter value may include at least one of a color, contrast, chroma, brightness, sharpness, a gamma, a gray scale, and a color temperature, for an image. For example, as shown in FIG. 7A, in case of an "image brightness setting" 703, the first means 311 displays an original image 711 whose brightness is not corrected, a first image 713 to which a brightness value in which a first reference value 723 is subtracted from original brightness 721 of the original image 711 is applied, and the second image 715, to which a brightness value in which a second reference value 725 is added to the original brightness 721 of the original image 711 is applied, on a display unit 701. Also, the first means 311 may display a plurality of images to which a plurality of image processing parameter values are applied step by step. For another example, as shown in FIG. 7B, in case of an "image setting" 731, the first means 311 may display an original image 741 whose brightness is not corrected, a first image 743 to which a brightness value in which a first reference value is subtracted from original brightness of the original image 741 is applied, a second image 745 to which a brightness value in which a second reference value is added to the original brightness of the original image 741 is applied, an original image 751 whose gamma is not corrected, a third image 753 to which a gamma value in which a third reference value is subtracted from original gamma of the original image 751 is applied, and a fourth image 755, to which a gamma value in which a fourth reference value is added to the original gamma of the original image 751 is applied, on the display unit 701.

The second means 313 verifies whether one of the plurality of images is selected. For one example, as shown in FIG. 7A, the second means 313 verifies whether any one is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied. Also, the second means 313 may verify whether any one of a plurality of images to which a plurality of image processing parameter values are applied step by step is selected. For example, as shown in FIG. 7B, the second means 313 may verify whether any one is selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755 to which the gamma value in which the fourth reference value is added to the original gamma of the original image 751 is applied.

The third means 315 applies an image processing parameter value for the selected image to a display or a camera. For one example, as shown in FIG. 7A, when the first image 713 is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied, the third means 315 applies the brightness value which is applied to the first image 713 to the display or the camera. For another example, as shown in FIG. 7B, when the second image 745 and the third image 753 are selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755 to which the gamma value in which the fourth reference value is added to the original gamma of the original image 751 is applied, the third means 315 may apply the brightness value which is applied to the second image 745 and the gamma value which is applied to the third image 753 to the display or the camera.

In addition, the electronic device may include a means for generating a personalization profile using an image processing parameter value. For one example, as shown in FIG. 7A, when the first image 713 is selected, the means included in the electronic device may generate a personalization profile which may be applied to the display or the camera, using the brightness value which is applied to the first image 713. For another example, as shown in FIG. 7B, when the second image 745 and the third image 753 are selected, the means included in electronic device may generate a personalization profile which may be applied to the display or the camera, using the brightness value which is applied to the second image 743 and the gamma value which is applied to the third image 753.

In addition, the electronic device may include a means for sharing a personalization profile. For example, as shown in FIG. 8, a first electronic device 801 may transmit a personalization profile to a second electronic device 803 using at least one application program. Herein, the first electronic device 801 may transmit the personalization profile to the second electronic device 803 through local area wireless communication (Bluetooth, NFC, Wi-Fi, Wi-Fi Direct, IrDA communication, etc.) or the communication system 140. For another example, the first electronic device 801 may transmit a personalization profile to at least one of a server 805 and a cloud server. Herein, the first electronic device 801 may transmit the personalization profile to at least one of the server 805 and the cloud server through the local area wireless communication (Bluetooth, NFC, Wi-Fi, Wi-Fi Direct, IrDA communication, etc.) or the communication system 140.

As described above, the electronic device may include a plurality of means for controlling the screen. Herein, the plurality of means for controlling the screen may be configured as one means.

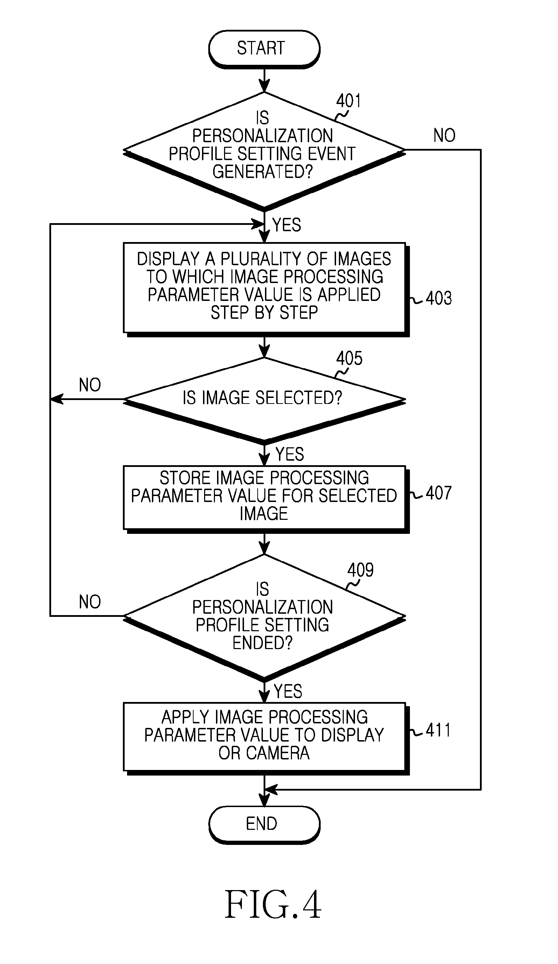

FIG. 4 illustrates a flowchart for a process of controlling a screen using an image processing parameter value in an electronic device according to another embodiment of the present disclosure.

Referring to FIG. 4, the electronic device verifies whether a personalization profile setting event is generated in step 401. For example, the electronic device verifies whether a menu for setting a personalization profile is selected by an operation of a user. Herein, the personalization profile may include at least one image processing parameter value for an image displayed on a display unit of the electronic device. Herein, the image processing parameter value may include at least one of a color, contrast, chroma, brightness, sharpness, a gamma, a gray scale, and a color temperature, for an image. If the personalization profile setting event is not generated, the electronic device ends the algorithm of FIG. 4.

On the other hand, when the personalization profile setting event is generated, the electronic device proceeds to step 403 and displays a plurality of images to which an image processing parameter value is applied step by step. For example, as shown in FIG. 7A, in case of an "image brightness setting" 703, the electronic device displays an original image 711 whose brightness is not corrected, a first image 713 to which a brightness value in which a first reference value 723 is subtracted from original brightness 721 of the original image 711 is applied, and a second image 715, to which a brightness value in which a second reference value 725 is added to the original brightness 721 of the original image 711 is applied, on a display unit 701. Also, the electronic device may display a plurality of images to which a plurality of image processing parameter values are applied step by step. For example, as shown in FIG. 7B, in case of an "image setting" 731, the electronic device may display an original image 741 whose brightness is not corrected, a first image 743 to which a brightness value in which a first reference value is subtracted from original brightness of the original image 741 is applied, a second image 745 to which a brightness value in which a second reference value is added to the original brightness of the original image 741 is applied, an original image 751 whose gamma is not corrected, a third image 753 to which a gamma value in which a third reference value is subtracted from original gamma of the original image 751 is applied, and a fourth image 755, to which a gamma value in which a fourth reference value is added to the original gamma of the original image 751 is applied, on the display unit 701.

The electronic device verifies whether one of the plurality of images is selected in step 405. For example, as shown in FIG. 7A, the electronic device verifies whether any one is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied. Also, the electronic device may verify whether any one of a plurality of images to which a plurality of image processing parameter values are applied step by step is selected. For example, as shown in FIG. 7B, the electronic device may verify whether any one is selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755, to which the gamma value in which the fourth reference value is added to the original gamma of the original image 751 is applied. If the image is not selected, the electronic device proceeds to step 403 and may hold the display of the plurality of images to which the image processing parameter value is applied step by step. In addition, when the image is not selected during a reference time, the electronic device ends the algorithm of FIG. 4.

On the other hand, when any one of the plurality of images is selected, the electronic device proceeds to step 407 and stores the image processing parameter value for the selected image. For one example, as shown in FIG. 7A, when the first image 713 is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied, the electronic device stores the brightness value which is applied to the first image 713. For another example, when the second image 745 and the third image 753 are selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755 to which the gamma value in which the fourth reference value is added to the original gamma of the original image 751 is applied, the electronic device may store the brightness value which is applied to the second image 745 and the gamma value which is applied to the third image 753.

Thereafter, the electronic device verifies whether personalization profile setting is ended in step 409. For example, the electronic device verifies whether a menu for ending the personalization profile setting is selected by an operation of the user. If the personalization profile setting is not ended, the electronic device proceeds to step 403 and displays a plurality of images to which an image processing parameter value is applied step by step. In addition, when the image is not selected during a reference time, the electronic device may end the algorithm of FIG. 4.

On the other hand, when the personalization profile setting is ended, the electronic device applies the image processing parameter value for the selected image to a display or a camera in step 411. For one example, as shown in FIG. 7A, when the first image 713 is selected, the electronic device applies the brightness value which is applied to the first image 713 to the display or the camera. For another example, when the second image 745 and the third image 753 are selected, the electronic device may apply the brightness value which is applied to the second image 745 and the gamma value which is applied to the third image 753 to the display or the camera.

Thereafter, the electronic device ends the algorithm of FIG. 4.

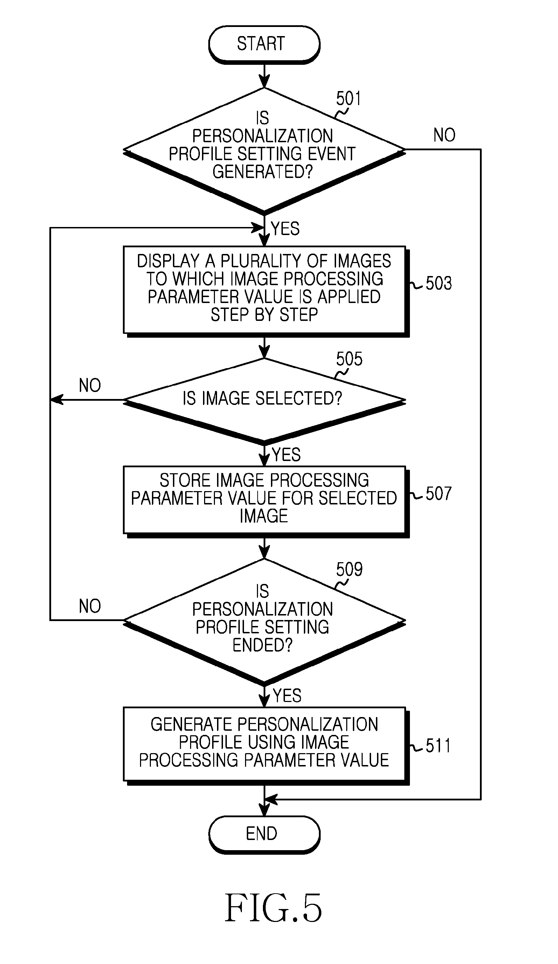

FIG. 5 illustrates a flowchart for a process of generating a personalization profile in an electronic device according to one embodiment of the present disclosure.

Referring to FIG. 5, the electronic device verifies whether a personalization profile setting event is generated in step 501. For example, the electronic device verifies whether a menu for setting a personalization profile is selected by an operation of a user. Herein, the personalization profile may include at least one image processing parameter value for an image displayed on a display unit of the electronic device. Herein, the image processing parameter value may include at least one of a color, contrast, chroma, brightness, sharpness, a gamma, a gray scale, and a color temperature, for an image. If the personalization profile setting event is not generated, the electronic device ends the algorithm of FIG. 5.

On the other hand, when the personalization profile setting event is generated, the electronic device proceeds to step 503 and displays a plurality of images to which an image processing parameter value is applied step by step. For example, in case of an "image brightness setting" 703, the electronic device displays an original image 711 whose brightness is not corrected, a first image 713 to which a brightness value in which a first reference value 723 is subtracted from original brightness 721 of the original image 711 is applied, and a second image 715, to which a brightness value in which a second reference value 725 is added to the original brightness 721 of the original image 711 is applied, on a display unit 701. Also, the electronic device may display a plurality of images to which a plurality of image processing parameter values are applied step by step. For example, as shown in FIG. 7B, in case of an "image setting" 731, the electronic device may display an original image 741 whose brightness is not corrected, a first image 743 to which a brightness value in which a first reference value is subtracted from original brightness of the original image 741 is applied, a second image 745 to which a brightness value in which a second reference value is added to the original brightness of the original image 741 is applied, an original image 751 whose gamma is not corrected, a third image 753 to which a gamma value in which a third reference value is subtracted from original gamma of the original image 751 is applied, and a fourth image 755, to which a gamma value in which a fourth reference value is added to the original gamma of the original image 751 is applied, on the display unit 701.

Thereafter, the electronic device verifies whether one of the plurality of images is selected in step 505. For example, as shown in FIG. 7A, the electronic device verifies whether any one is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied. Also, the electronic device may verify whether any one of a plurality of images to which a plurality of image processing parameter values are applied step by step is selected. For example, as shown in FIG. 7B, the electronic device may verify whether any one is selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755 to which the gamma value in which the fourth reference value is added to the original gamma of the original image 751 is applied. If the image is not selected, the electronic device proceeds to step 503 and may hold the display of the plurality of images to which the image processing parameter value is applied step by step. In addition, when the image is not selected during a reference time, the electronic device ends the algorithm of FIG. 5.

On the other hand, when any one of the plurality of images is selected, the electronic device proceeds to step 507 and stores the image processing parameter value for the selected image. For one example, as shown in FIG. 7A, when the first image 713 is selected among the original image 711 whose brightness which is displayed on the display unit 701 is not corrected, the first image 713 to which the brightness value in which the first reference value 723 is subtracted from the original brightness 721 of the original image 711 is applied, and the second image 715 to which the brightness value in which the second reference value 725 is added to the original brightness 721 of the original image 711 is applied, the electronic device stores the brightness value which is applied to the first image 713. For another example, as shown in FIG. 7B, when the second image 745 and the third image 753 are selected among the original image 741 whose brightness which is displayed on the display unit 701 is not corrected, the first image 743 to which the brightness value in which the first reference value is subtracted from the original brightness of the original image 741 is applied, the second image 745 to which the brightness value in which the second reference value is added to the original brightness of the original image 741 is applied, the original image 751 whose gamma is not corrected, the third image 753 to which the gamma value in which the third reference value is subtracted from the original gamma of the original image 751 is applied, and the fourth image 755 to which the gamma value in which the fourth reference value is added to the original gamma of the original image 751 is applied, the electronic device may store the brightness value which is applied to the second image 745 and the gamma value which is applied to the third image 753.

Thereafter, the electronic device verifies whether personalization profile setting is ended in step 509. For example, the electronic device verifies whether a menu for ending the personalization profile setting is selected by an operation of the user. If the personalization profile setting is not ended, the electronic device proceeds to step 503 and displays a plurality of images to which an image processing parameter value is applied step by step. In addition, when the image is not selected during a reference time, the electronic device may end the algorithm of FIG. 5.

On the other hand, when the personalization profile setting is ended, the electronic device generates a personalization profile using the image processing parameter value in step 511. For one example, as shown in FIG. 7A, when the first image 713 is selected, the electronic device generates a personalization profile which may be applied to the display or the camera using the brightness value which is applied to the first image 713. For another example, as shown in FIG. 7B, when the second image 745 and the third image 753 are selected, the electronic device may generate a personalization profile which may be applied to the display or the camera using the brightness value which is applied to the second image 745 and the gamma value which is applied to the third image.

In addition, when the personalization profile setting is ended, the electronic device may apply the image processing parameter value for the selected image to a display or a camera. For one example, as shown in FIG. 7A, when the first image 713 is selected, the electronic device applies the brightness value which is applied to the first image 713 to the display or the camera. For another example, as shown in FIG. 7B, when the second image 745 and the third image 753 are selected, the electronic device may apply the brightness value which is applied to the second image 745 and the gamma value which is applied to the third image 753 to the display or the camera.

Thereafter, the electronic device ends the algorithm of FIG. 5.

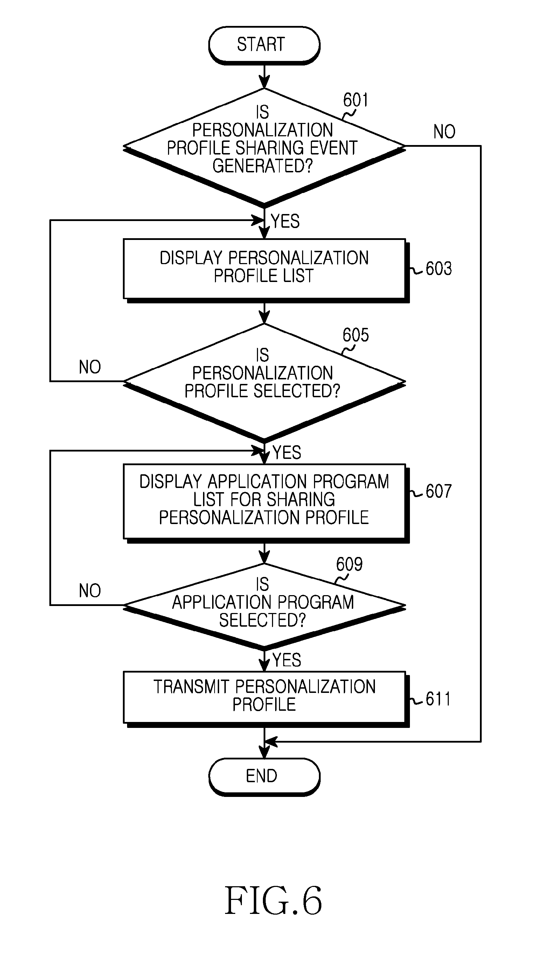

FIG. 6 illustrates a flowchart for a process of sharing a personalization profile in an electronic device according to one embodiment of the present disclosure.

Referring to FIG. 6, the electronic device verifies whether a personalization profile sharing event is generated in step 601. For example, the electronic device verifies whether a menu for sharing a personal profile is selected by an operation of a user. If the personalization profile sharing event is not generated, the electronic device ends the algorithm of FIG. 6.

On the other hand, when the personalization profile sharing event is generated, the electronic device displays a personalization profile list in step 603. Herein, the electronic device displays at least one personalization profile stored by the user.

After the personalization profile list is displayed, the electronic device verifies a personalization profile is selected in step 605. If the personalization profile is not selected, the electronic device holds the display of the personalization profile in step 603. In addition, if the personalization profile is not selected during a reference time, the electronic device my end the algorithm of FIG. 6.

On the other hand, if the personalization profile is selected, the electronic device displays an application program list for sharing the personalization profile in step 607. Herein, an application program for sharing the personalization profile may include at least one application program which may transmit the personalization profile to a counterpart electronic device.

After the application program list for sharing the personalization profile is displayed, the electronic device verifies whether an application program is selected in step 609. If the application program is not selected, the electronic device holds the display of the application program list for sharing the personalization profile in step 607. In addition, if the application program is not selected during a reference time, the electronic device may end the algorithm of FIG. 6.

On the other hand, when the application program is selected, the electronic device transmits the personalization profile in step 611. For example, as shown in FIG. 8, a first electronic device 801 may transmit a personalization profile to a second electronic device 803 using the application program selected in step 609. Herein, the first electronic device 801 may transmit the personalization profile to a second electronic device 803 through local area wireless communication (Bluetooth, NFC, Wi-Fi, Wi-Fi Direct, IrDA communication, etc.) or a communication system. For another example, the first electronic device 801 may transmit the personalization profile to at least one of a server 805 and a cloud server. Herein, the first electronic device 801 may transmit the personalization profile to at least one of the server 805 and the cloud server through the local area wireless communication (Bluetooth, NFC, Wi-Fi, Wi-Fi Direct, IrDA communication, etc.) or the communication system.

In addition, the second electronic device 803 may apply the personalization profile transmitted from the first electronic device 801 to a display or a camera. Herein, second electronic device 803 may receive the personalization profile from the first electronic device 801 through the local area wireless communication (Bluetooth, NFC, Wi-Fi, Wi-Fi Direct, IrDA communication, etc.) or the communication system. Also, the second electronic device 803 may apply a personalization profile transmitted from the server 805 or the cloud server to the display or the camera. Herein, the second electronic device 803 may receive the personalization profile from at least one of the server 805 and the cloud server through the local area wireless communication (Bluetooth, NFC, Wi-Fi, Wi-Fi Direct, IrDA communication, etc.) or the communication system.

Thereafter, the electronic device ends the algorithm of FIG. 6.

As described above, there is an advantage in that the electronic device according to embodiments of the present disclosure may control a color sense of the display or the camera by controlling the screen using the image processing parameter value for the image selected among images to which the image processing parameter value is applied step by step.

While the present disclosure has been particularly shown and described with reference to exemplary embodiments thereof, it will be understood by those skilled in the art that various changes in form and details may be made therein without departing from the spirit and scope of the present disclosure as defined by the appended claims.

## Claims

1. A method of operating an electronic device, the method comprising:
displaying a plurality of images in which an image processing parameter value is applied to a reference image step by step;
selecting one of the plurality of images; and
applying an image processing parameter value for the selected image to a display or a camera.

2. The method of claim 1, wherein the image processing parameter value includes at least one of a color, contrast, chroma, brightness, sharpness, a gamma, a gray scale, or a color temperature for the selected image.

3. The method of claim 1, wherein the reference image includes an image photographed by the camera of the electronic device.

4. The method of claim 1, wherein displaying the plurality of images in which the image processing parameter value is applied to the reference image step by step comprises displaying a plurality of images in which each of a plurality of image processing parameter values is applied to the reference image step by step when the image processing parameter value is the plurality of image processing parameter values.

5. The method of claim 1, further comprising generating a profile using the image processing parameter value for the selected image.

6. The method of claim 5, wherein generating the profile comprises storing the profile in a storage device that is wire or wirelessly connected to the electronic device.

7. The method of claim 5, further comprising transmitting the profile to a counterpart electronic device that is wire or wirelessly connected to the electronic device.

8. An electronic device comprising:
at least one processor; and
at least one memory configured to store at least one program, wherein at least the one processor is configured to execute program code of at least the one program to:
cause a display to display a plurality of images in which an image processing parameter value is applied to a reference image step by step, select one of the plurality of images, and apply an image processing parameter value for the selected image to the display or a camera.

9. The electronic device of claim 8, wherein the image processing parameter value includes at least one of a color, contrast, chroma, brightness, sharpness, a gamma, a gray scale, or a color temperature for the selected image.

10. The electronic device of claim 8, wherein the reference image includes an image photographed by the camera of the electronic device.

11. The electronic device of claim 8, wherein at least the one processor is configured to cause the display to display a plurality of images in which each of a plurality of image processing parameter values is applied to the reference image step by step when the image processing parameter value is the plurality of image processing parameter values.

12. The electronic device of claim 8, wherein at least the one processor is configured to generate a profile using the image processing parameter value for the selected image.

13. The electronic device of claim 12, wherein at least the one processor is configured to store the profile in a storage device that is wire or wirelessly connected to the electronic device.

14. The electronic device of claim 12, wherein at least the one processor is configured to cause transmission of the profile to a counterpart electronic device that is wire or wirelessly connected to the electronic device.

15. A computer program comprising computer program code means adapted to perform all the steps of any one of the method claims 1 to 7 when the computer program is run on a processor.
